# EUROPÄISCHE PATENTSCHRIFT

(11) **EP 1 115 998 B1**
(45) Veröffentlichungstag und Bekanntmachung des Hinweises auf die Patenterteilung: **18.08.2004**
(21) Anmeldenummer: 00947818.1
(22) Anmeldetag: 23.06.2000
(51) Int. Cl.: F21V 8/00, H01J 61/02, H01J 65/04

(54) **LÄNGLICHE LICHTQUELLE**
LONGITUDINAL LIGHT SOURCE
SOURCE LUMINEUSE ALLONGEE

(30) Priorität: 21.07.1999 DE 19933405
(43) Veröffentlichungstag der Anmeldung: 18.07.2001
(73) Patentinhaber: Patent-Treuhand-Gesellschaft für elektrische Glühlampen mbH, 81543 München (DE)
(72) Erfinder: DÖLL, Gerhard, D-89075 Ulm (DE)
(86) Internationale Anmeldenummer: PCT/DE2000/002053
(87) Internationale Veröffentlichungsnummer: WO 2001/007830

(56) Entgegenhaltungen:
- DE-A- 4 127 100
- DE-C- 19 718 395
- US-A- 4 935 632
- US-A- 5 400 224
- US-A- 5 667 289
- PATENT ABSTRACTS OF JAPAN vol. 017, no. 653, 3. Dezember 1993 (1993-12-03) & JP 05 217493 A (TOSHIBA ELECTRIC EQUIPMENT CO)
- PATENT ABSTRACTS OF JAPAN vol. 016, no. 105, 16. März 1992 (1992-03-16) & JP 03 280079 A (TOSHIBA LIGHTING & TECHNOL CORP)

## Beschreibung

Die Erfindung geht aus von einer länglichen Lichtquelle gemäß dem Oberbegriff des Anspruchs 1.

Derartige Lichtquellen werden beispielsweise in Kombination mit einer Lichtleiterplatte zur Hinterleuchtung von Anzeigen, insbesondere von Flüssigkristallanzeigen (LCD = Liquid Crystal Display) aber auch großflächigen Werbetafeln verwendet.

Dazu wird das Licht der länglichen Lichtquelle durch mindestens eine Schmalseite ("Kante", "Edge") der Lichtleiterplatte hindurch in diese eingekoppelt (sogenannte "Edge-Light Technik"). Mittels Reflexion an einer an der Unterseite der Lichtleiterplatte angebrachten diffusen Reflexionsschicht tritt dieses Licht über die gesamte Frontseite der Lichtleiterplatte hindurch nach außen und wirkt so wie eine flache, entsprechend den Abmessungen der Lichtleiterplatte ausgedehnte Lichtquelle.

Als längliche Lichtquelle werden beispielsweise stabförmige oder auch gebogene, beispielsweise L- oder U-förmige Leuchtstofflampen verwendet.

Zur Erhöhung der Leuchtdichte können die länglichen Lichtquellen entlang ihrer Längsachse auf der Innen- oder Außenseite des Lampengefäßes mit einem Reflektor für sichtbares Licht versehen sein, der entlang der Längsachse über einen definierten Bereich ausgespart ist. Auf diese Weise ist eine Apertur geschaffen, durch die hindurch das Licht der Lampe nach außen gelangt (Aperfurlampe).

Längliche Lichtquellen werden aber auch für die Allgemeinbeleuchtung sowie dekorative Zwecke und zunehmend in der Automobiltechnik, z.B. als Blink- oder Stopplicht und für die Innenbeleuchtung eingesetzt. Von besonderer Bedeutung für die meisten der genannten Einsatzzwecke ist die Möglichkeit, die längliche Lichtquelle einer vorgegebenen Form anzupassen, beispielsweise an eine Fahrzeugform für den Einsatz als Kfz-Blinklicht.

### Stand der Technik

Obwohl die Erfindung ihre vorteilhafte Wirkung mit allen länglichen Lampen entfaltet, die einen signifikanten Anteil ihres Lichtstroms durch die Stirnseite eines oder beider Lampenenden abstrahlen, haben sich längliche Lampen auf der Basis dielektrisch behinderter Entladungen mit streifenförmigen Elektroden als besonders vorteilhaft erwiesen. Diese Form der Elektroden ermöglicht es im Gegensatz zu konventionellen an den jeweiligen Stirnseiten des zylinderförmigen Entladungsgefäßes angebrachten Elektroden auch, die Länge der nichtleuchtenden Enden minimal zu halten.

Eine derartige Lampe ist aus der DE-PS 19718 395 Cl bekannt. Es handelt sich hierbei um eine rohrförmige Apertur-Leuchtstofflampe, die an einem Ende einen Sockel mit zwei Anschlußstiften aufweist. Die Lampe weist außerdem parallel zur Rohrlängsachse zwei diametral angeordnete streifenförmige Elektroden auf, eine davon auf der Außen- und die andere auf der Innenwandung des Entladungsgefäßes. Die beiden Elektroden sind im Innern des Sockels mit den beiden Anschlußstiften verbunden. Die Anschlußstifte sind ihrerseits über elektrische Leitungen mit den beiden Polen einer Impulsspannungsquelle verbunden. Die Lampe zeichnet sich durch eine relativ hohe Nutzstrahlungseffizienz aus.

Allerdings bleibt der axial an den beiden Lampenenden durch die jeweilige Stirnseite abgestrahlte Lichtstrom ungenutzt. Außerdem ist es schwierig, derartige Lampen in eine nichtstabförmige, z.B. L-Form zu biegen, ohne die Elektrodenbahnen unerwünscht zu beeinflussen. Beim Biegen des Lampengefäßes besteht die Gefahr, daß sich die Elektrodenbahnen zumindest in Bereichen großer Krümmung von der Gefäßwand ablösen.

DE-A 41 27 100 zeigt eine Langbogenblitzlampe, die mit Ausnahme eines Endabschlusses verspiegelt ist, so dass nur durch diesen Endabschluss Licht aus der Blitzlampe austreten kann. Dieses Licht wird in einen länglichen Lichtleiter eingekoppelt, um einen eng begrenzten Lichtfleck zu erzeugen. Die Langbogenblitzlampe dient unter anderem als Pumplichtquelle für Laser.

US-A.4 935 632 zeigt eine Beleuchtungsvorrichtung mit einer zylindrischen, leuchtstoff- und tritiumhaltigen Lichtquelle, einem länglichen Lichtleiter sowie einer Auskoppeloptik. Der Leuchtstoff wird mittels der Betastrahlung des Tritium zum Leuchten angeregt. Die zylindrische Lichtquelle ist mit Ausnahme einer Stirnfläche verspiegelt. Das aus der unverspiegelten Stirnfläche austretende Licht wird über den Lichtleiter in die Auskoppeloptik geleitet. Die Beleuchtungsvorrichtung dient unter anderem zur Beleuchtung des Fahrbahnrandes.

JP-A 5 217 493 zeigt eine Beleuchtungsvorrichtung mit herkömmlichen Kaltkathoden-Leuchtstofflampen. Über Lichtleitpfade wird Licht einer Hilfslichtquelle in die Leuchtstofflampen eingekoppelt. Die dadurch im Innern der Leuchtstofflampen erzeugten Photoelektronen sollen das Zündverhalten der Kaltkathoden-Leuchtstofflampen in dunkler Umgebung verbessern.

US-A 5 400 224 zeigt eine flache Beleuchtungsvorrichtung mit einer Lichtleiterplatte. Parallel zu zwei gegenüberliegenden Schmalseiten der Lichtleiterplatte ist jeweils eine längliche Lampe angeordnet. Dadurch wird das längs der Lampe abgestrahlte Licht in die Lichtleiterplatte eingekoppelt. Die Lichtleiterplatte weist eine spezielle Formgebung auf, um damit eine möglichst homogene Leuchtfläche zur Hinterleuchtung, unter anderem von LCD, zu erzielen.

### Darstellung der Erfindung

Es ist Aufgabe der vorliegenden Erfindung, eine längliche Lichtquelle gemäß dem Oberbegriff des Anspruchs 1 bereitzustellen, welche die Nachteile des Standes der Technik vermeidet und die sich in nahezu beliebigen Formen und Längen auf einfache Weise realisieren läßt.

Ein weiterer Aspekt der Erfindung ist es, den aus den Stirnflächen der länglichen Lichtquelle axial austretenden Lichtstrom im wesentlichen in radialer Richtung zu nutzen.

Diese Aufgabe wird durch die kennzeichnenden Merkmale des Anspruchs 1 gelöst. Besonders vorteilhafte Ausgestaltungen finden sich in den abhängigen Ansprüchen.

Außerdem wird Schutz für eine Beleuchtungsvorrichtung mit dieser länglichen Lichtquelle beansprucht, insbesondere zur Hinterleuchtung von LCD.

Der Grundgedanke der Erfindung basiert auf der Erkenntnis, daß bei länglichen Lampen unter Umständen ein beträchtlicher Anteil des gesamten Lichtstroms aus den Stirnflächen der Lampenenden in axialer Richtung auskoppelt. Der Grund hierfür wird bei Leuchtstofflampen darin gesehen, daß das rohrförmige Entladungsgefäß durch die Leuchtstoffbeschichtung bzw. bei Aperturlampen durch die Reflektorbeschichtung wie ein rohrförmiger Lichtleiter (Lightpipe) wirkt, der das Licht entlang der Rohrachse führt. Dieser Effekt tritt besonders ausgeprägt bei den eingangs erwähnten länglichen Lampen auf der Basis dielektrisch behinderter Entladungen mit streifenförmigen Elektroden auf. Im Unterschied zu länglichen Lampen mit konventionell an den beiden Enden des rohrförmigen Entladungsgefäßes axial angeordneten Elektroden, beispielsweise Glühwendeln oder Kaltkathoden, kann nämlich das Licht - im hier betrachteten Fall - das Entladungsgefäß axial durch die Enden hindurch im wesentlichen ungehindert verlassen.

Die Erfindung schlägt nun eine längliche Lichtquelle mit mindestens einer länglichen dielektrisch behinderten Entladungslampe mit zwei Enden vor, die an mindestens einem Ende ein Lichtleitelement aufweist.

Die Funktion eines derartigen Lichtleitelements besteht im Kern darin, im Lampenbetrieb das durch das betreffende Ende der Lampe hindurch tretende Licht zumindest weitgehend aufzunehmen und für den angestrebten Beleuchtungszweck geeignet räumlich verteilt wieder abzustrahlen.

Das bzw. jedes Lichtleitelement besteht aus einem transparenten nichtleitenden Kunststoffmaterial, z.B. Akrylglas. Dadurch können die Elemente relativ preiswert, z.B. in Spritzgußtechnik, hergestellt werden.

In einer Ausführungsform ist ein Lichtleitelement mit einer Vertiefung zur Aufnahme einer Lampe versehen. Auf diese Weise nimmt das Lichtleitelement das durch das Lampenende austretende Licht auf und strahlt es mittels Streuung innerhalb des Lichtleitelements nach außen bevorzugt radial ab. Die Lichtverluste beim Durchgang durch den Lichtleiter sind dabei vernachlässigbar.

Zur Beeinflussung der räumlichen Abstrahlcharakteristik ist die Oberfläche des Lichtleitelements geeignet gestaltet. So kann die Oberfläche mattiert sein, um eine nahezu lambertsche Lichtverteilung in alle Raumrichtungen zu erreichen, wie sie auch Leuchtstofflampen haben. Eine andere Möglichkeit besteht darin, alle Oberflächen, mit Ausnahme der Vertiefung zur Lichteinkopplung und eines schmalen, mattierten Streifens zur Lichtauskopplung (Apertur), zu verspiegeln, z.B. durch Bedampfen mit Aluminium oder Bekleben mit einer spiegelnden Folie. Trifft das Licht auf die nicht verspiegelte Oberfläche des Elementes, so wird es ausgekoppelt. Trifft es auf eine reflektierende Fläche, wird es zurück in das lichtleitende Element reflektiert. Dies geschieht solange, bis es auf die Austrittsfläche (Apertur) trifft und das Element verlassen kann. Auf diese Weise erscheint das Lichtleitelement hell, als ob das Licht in diesem erzeugt werden würde. Bevorzugt wird die Mattierung bei der Verwendung von Leuchtstofflampen einzusetzen, die Verspiegelung hingegen in erster Linie bei Apertur-Leuchtstofflampen.

In einer Weiterbildung fungiert das Lichtleitelement zusätzlich als Sockel. Außerdem ist es auch vorgesehen, daß der Lichtleitelement-Sockel Anschlüsse zur Verbindung mit einem elektrischen Vorschaltgerät aufweist. Zur Versorgung mit einem elektrischen Vorschaltgerät sind die Anschlüsse mit den Elektroden verbunden. Bei einer beidseitig gesockelten Lampe ist es im allgemeinen ausreichend, wenn nur einer der beiden Sockel über Anschlüsse verfügt.

Wird die Lampe in Verbindung mit einer Lichtleiterplatte, z.B. zur Hinterleuchtung von LCD, verwendet, weist das mindestens eine Lichtleitelement eine Schräge auf, die mit der Lampenlängsachse einen Winkel typischerweise im Bereich zwischen ca. 30° bis 60°, bevorzugt zwischen ca. 40° und 50°, besonders bevorzugt von ca. 45° einschließt. Dadurch wird das in axialer Richtung aus der Lampe emittierte Licht durch eine innere Reflexion in Richtung der Kante der Lichtleiterplatte gelenkt und in diese ohne große Verluste eingekoppelt.

Auf diese Weise kann eine Lampe verwendet werden, die kürzer als die entsprechende Lichtleiterplatte ist. Dadurch wird auch verhindert, daß die Sokkelelemente entweder über die Lichtleiterplatte hinaus stehen oder die Lichtleiterplatte an ihren Ecken dunkel erscheint. Durch die Nutzung des in axialer Richtung emittierten Lichtes wird darüber hinaus die Gesamteffizienz der Lichteinkopplung verbessert.

In einer weiteren Ausführungsform fungiert das Lichtleitelement zusätzlich als Koppler für mindestens zwei Lampen. Dazu weist das Lichtleitelement mindestens zwei Vertiefungen auf, die in einem definierten Winkel zueinander stehen und die jeweils ein Ende der Lampen aufnehmen. Darüber hinaus enthalten die Koppelelemente elektrische Kontakte, die es ermöglichen, die einzelnen Lampen miteinander elektrisch zu verbinden. Da die Koppler durch den oben erläuterten Lichtleiteffekt relativ hell sind, entsteht der Eindruck eines kontinuierlichen Lichtbandes. Außerdem ist das Lichtband durch geeignete Wahl des Winkels zwischen den Vertiefungen für die Lampenenden im wesentlichen frei formbar, z.B. als "L" oder "V" usw.. Mit Hilfe mehrerer Lampen lassen sich auch komplexere Formen, z.B. Bögen und ähnliches, zumindest annähern. Ein Lichtleitelement-Koppler hat also gleich vier Funktionen: 1. mechanische Halterung der Lampen, 2. Formgebung der Lichtquelle, 3. elektrische Verbindung der Lampen und 4. Lichtleitung und Umverteilung des axial aus den Lampenenden austretenden Lichts.

Derartige quasikontinuierliche "Lichtbänder" aus zwei oder mehr Lampen sind mit Hilfe der Lichtleitelemente und in Verbindung beispielsweise mit der hier bevorzugten und in der WO94/23442 beschriebenen gepulsten Betriebsweise für dielektrisch behinderte Entladungen relativ einfach realisierbar.

Die genannte Betriebsweise ermöglicht es nämlich, daß mehrere Lampen seriell bzw. die Entladungen der jeweiligen Lampen parallel betrieben werden können. Werden z.B. zwei gleich lange Stablampen so miteinander elektrisch verbunden, daß die Kathode mit der Kathode und die Anode mit der Anode verbunden wird (Parallelschaltung), entsteht eine Lichtquelle deren Länge einfach verdoppelt wurde. Diese Lichtquelle kann jedoch mit der gleichen Spannung gezündet und betrieben werden wie die der einzelnen Lampen, da nach der eingangs erläuterten Elektrodenkonfiguration die Entladung senkrecht zur Lampenachse verläuft und sich folglich die Schlagweite nicht mit der Lampenlänge verändert. Dadurch ist es möglich, über die elektrischen Kontakte an den Lichtleitelementen eine Serie von zwei oder mehr Lampen mit einem einzigen Vorschaltgerät zu betreiben.

Natürlich können auch einzelne Koppelelemente mit einer Kabelverbindung zum Vorschaltgerät versehen sein, um z.B. bei langen Lichtbändern mehr als ein Vorschaltgerät zu benutzen, oder wenn es günstiger ist, das Vorschaltgerät mehr in der Mitte des Bandes, als an dessen Ende zu plazieren.

Außerdem können mit den Lichtleitelementen auch gekrümmte Lampen miteinander verbunden werden, wenn z.B. der gewünschte Krümmungsradius klein ist, z.B. bei einem rechten Winkel, aber insgesamt eine mehr oder weniger kontinuierlich geschwungene Form des Lichtbandes erzeugt werden soll.

Ebenso ist es erfindungsgemäß möglich, ein flexibles Lichtband beliebiger Länge zu realisieren. Dazu sind die beschriebene Koppelelemente aus einem flexiblen lichtleitenden Material hergestellt.

Ein großer Vorteile der Erfindung besteht demnach darin, nahezu jede Form und Länge von Lichtbändern aus den standardisierten Bauelementen Lichtleitelement-Sockel, Lichtleitelement-Koppler, Lampe und EVG realisieren zu können. Dieses modulare Konzept verbindet eine höhe Flexibilität sowohl hinsichtlich der Länge als auch der Form der Lichtquelle mit einer kostengünstigen Fertigung.

Außerdem werden dunkle Zonen an den Enden vermieden, d.h. die Länge der Lichtquelle entspricht der Gesamtlänge der gesockelten Lampe.

In einer Weiterbildung weisen die Lichtleitelemente Halterungen auf, mit denen die längliche Lichtquelle auf einem Träger, z.B. einer Leuchte, montiert werden kann.

### Beschreibung der Zeichnungen

Im folgenden soll die Erfindung anhand mehrerer Ausführungsbeispiele näher erläutert werden. Es zeigen:
- Figur 1a: eine längliche Lichtquelle mit zwei mittels Lichtleitelement-Koppler gekoppelten stabförmigen Apertur-Leuchtstofflampe und zwei Lichtleitelement-Sockeln im Längsschnitt,
- Figur 1b: wie Figur 1a, aber in Draufsicht längs Richtung x,
- Figur 1c: wie Figur 1b, aber ein Querschnitt längs der Linie Ia-Ib,
- Figur 2: eine längliche Lichtquelle mit einer stabförmigen Apertur-Leuchtstofflampe und zwei Sockeln mit Schräge im Längsschnitt,
- Figur 3: eine flache Beleuchtungsvorrichtung mit einer Lichtleiterplatte und zwei länglichen Lichtquellen gemäß Figur 2.

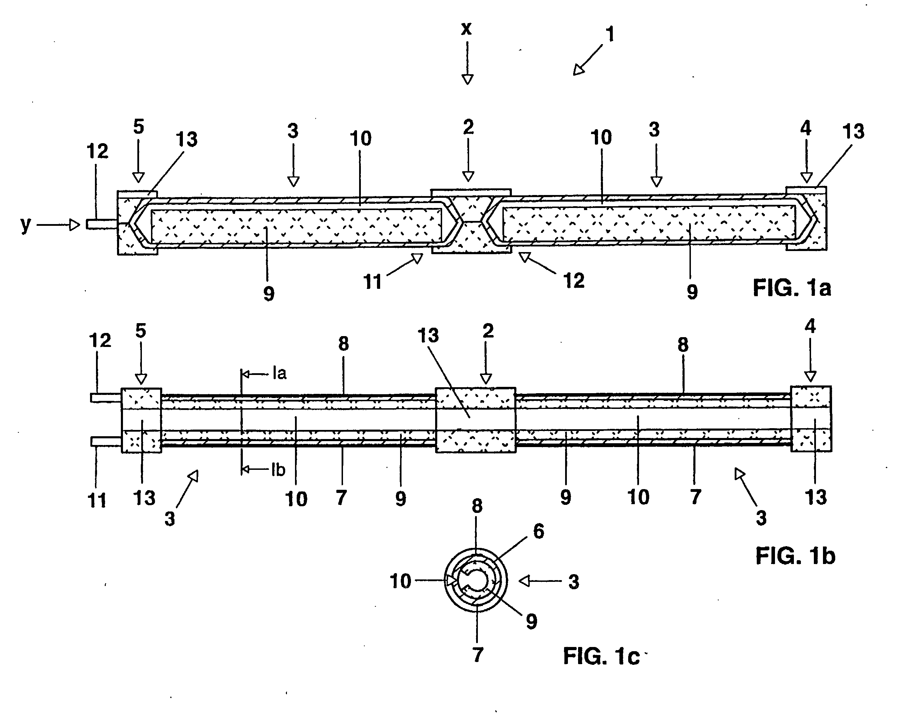

Die Figuren 1a, 1b, 1c zeigen schematisch einen Längsschnitt, eine Draufsicht längs der Richtung x bzw. einen Querschnitt längs der Linie Ia-Ib einer erfindungsgemäßen länglichen Lichtquelle 1 mit zwei mittels Lichtleitelement-Koppler 2 gekoppelten stabförmigen Apertur-Leuchtstofflampen 3 und zwei Lichtleitelement-Sockeln 4, 5.

Das Entladungsgefäß 6 jeder Lampe 3 weist zwei linienartige Elektroden 7, 8 auf, die auf der Außenwandung des Entladungsgefäßes 6 diametral und parallel zur Längsachse der stabförmigen Lampen 3 angeordnet sind. Das Entladungsgefäß 6 besteht aus Glas und wirkt so für die Elektroden 7, 8 als dielektrische Barriere bezüglich des Innern des Entladungsgefäßes 6, d.h. im Lampenbetrieb bezüglich der Entladung. Es handelt sich hier also um eine beidseitig dielektrisch behinderte Entladung. Die Innenwandung des Entladungsgefäßes 6 weist eine Leuchtstoffschicht 9 auf, wobei eine längliche Apertur 10 ausgespart ist. Im Innern des Entladungsgefäßes 6 befindet sich Xenon mit einem Fülldruck von ca. 15 kPa.

Der Lschtleitelement-Koppler 2 weist zwei diametral angeordnete zylindrische Vertiefungen zur Aufnahme je eines Endes der beiden Lampen 3 auf. Innerhalb des Lichtleitelement-Kopplers 2 sind jeweils die Elektroden 7,8 paarweise miteinander verbunden, d.h. die Elektrode 7 der ersten Lampe 3 ist mit der korrespondierenden Elektrode 7 der zweiten Lampe 3 und analog ist die Elektrode 8 der ersten Lampe 3 mit der korrespondierenden Elektrode 8 der zweiten Lampe 3 verbunden (nicht dargestellt) .

An jedes der beiden Enden der länglichen Lichtquelle 1 ist jeweils einer der beiden Lichtleitelement-Sockel 4, 5 angeordnet. Außerdem weist einer der beiden Sockel 5 zwei Anschlußstifte 11, 12 zum Anschuß eines elektrischen Vorschaltgerätes (nicht dargestellt) auf. Über diese Anschlußstifte 11, 12 wird im Betrieb sowohl die erste Lampe 3 und mit Hilfe des Lichtleitelement-Kopplers 2 auch die zweite Lampe 3 mit einem gemeinsamen elektrischen Vorschaltgerät versorgt.

Bevorzugt liefert das Vorschaltgerät Wirkleistungspulse gemäß der bereits eingangs zitierten WO94/23442. Eine geeignete Schaltungsanordnung zur Realisierung dieser gepulsten Betriebsweise für dielektrisch behinderte Entladungen findet sich in der EP-A-0 781 078, deren Offenbarung hiermit in Bezug genommen ist.

Die Lichtleitelemente 2, 4, 5 bestehen aus Akrylglas und weisen wie die beiden Lampen 3 jeweils eine Apertur 13 auf. Dadurch nimmt der Betrachter während des Lampenbetriebs im Bereich der Lampen-Aperturen 10 und der Lichtelemente-Aperturen 13 ein schmales helles Lichtband war, welches länger als die summarische Länge der beiden Einzellampen 3 ist.

An dieser Stelle sei nochmals darauf hingewiesen, daß auch drei oder mehr Lampen mit entsprechenden Lichtelement-Koppler zu einer erfindungsgemäßen länglichen Lichtquelle verbunden sein können. Ebenso können die Vertiefungen der Lichtelement-Koppler und folglich die darin angeordneten Lampen auch einen Winkel zueinander aufweisen, der von 180°(= stabförmig) verschiedenen ist, beispielsweise rechtwinklig, spitz- oder stumpfwinklig, L- oder U-förmig usw..

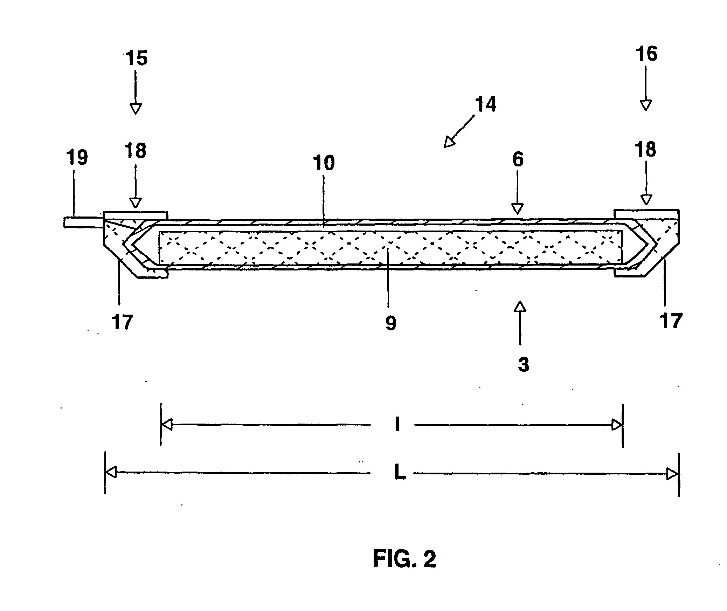

Figur 2 zeigt einen schematischen Längsschnitt einer weiteren erfindungsgemäßen länglichen Lichtquelle 14. Gleichartige Merkmale, wie in den Figuren 1a-c, sind mit den gleichen Bezugsziffern versehen. Die Lichtquelle 14 besteht aus einer stabförmigen Apertur-Leuchtstofflampe 3, die beidseitig mit Sockeln 15, 16 versehen ist. Die Apertur-Leuchtstofflampe 3 ist vom gleichen Typ wie jene aus Figur 1, d.h. sie weist ebenfalls zwei linienartige Elektroden (nicht sichtbar) auf der Außenwandung des Entladungsgefäßes 6 auf. Außerdem ist die Innenwandung des Entladungsgefäßes 6 ebenfalls mit einer Leuchtstoffschicht 9 versehen, mit Ausnahme der Apertur 10.

Die beiden Sockeln 15, 16 weisen je eine Schräge 17 auf, die mit der Längsachse der Lampe 3 einen Winkel von 45° einschließt. Die Sockel 15, 16 sind mit Hilfe der Spiegelfolie Scotch Brand 850 der Firma 3M verspiegelt, wobei jeweils nur eine, der Schräge 17 gegenüberliegende Apertur 18 ausgespart ist. Das im Betrieb axial aus den Lampenenden austretende Licht wird dadurch unter anderem von der Schräge 17 reflektiert und über die Sockel-Apertur 18 ausgekoppelt und zwar in der gleichen Richtung, wie das durch die Lampen-Apertur 10 ausgekoppelte Licht. Mit anderen Worten wird mit Hilfe der Lichtelement-Sockel 15, 16 mit Schräge 17 und Apertur 18 der axiale Lichtstrom der Lampe 3 in die Richtung des durch die Lampen-Apertur 10 emittierten Lichtstroms umgelenkt. Dadurch ist die effektive Leuchtlänge L der Lichtquelle 14 größer als die tatsächliche Länge 1 der Lampe 3 selbst. Außerdem ist der Gesamtlichtstrom der Lichtquelle 14 in Richtung ihrer Apertur 10, 18 höher, als bei einer vergleichbaren Lampe ohne Lichtelement-Sockel 15,16, da durch die Lichtelement-Sockel 15,16 auch der axiale Lichtstrom genutzt wird.

Einer der beiden Sockel 15 weist zwei Anschlußstifte 19 (nur einer ist sichtbar) auf, die mit den beiden Elektroden verbunden sind (nicht dargestellt) und dem Anschluß eines elektronischen Vorschaltgerätes dienen.

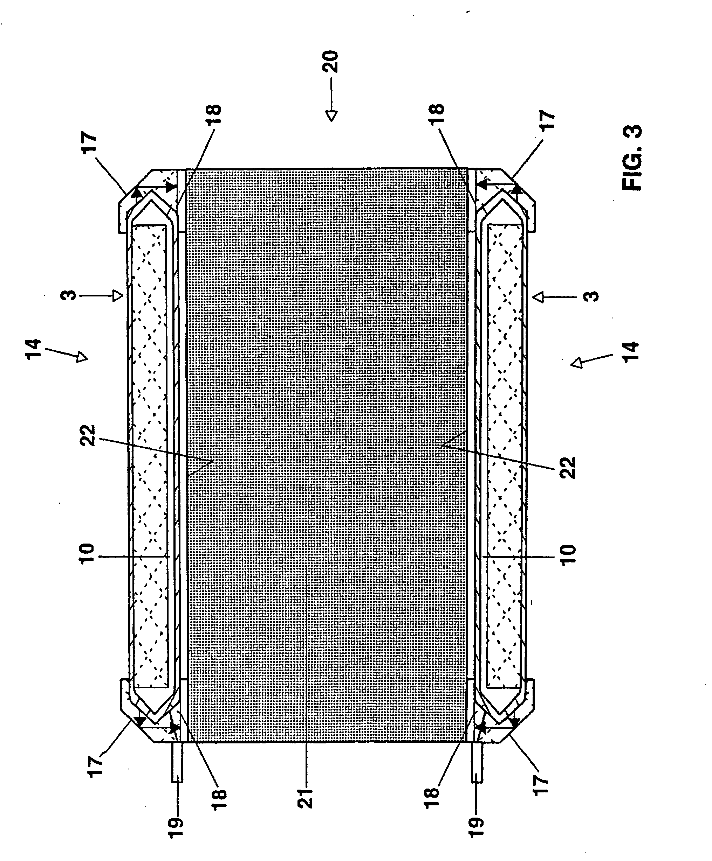

In Figur 3 ist eine flache Beleuchtungsvorrichtung 20 mit einer quaderähnlichen Lichtleiterplatte 21 und zwei länglichen Lichtquellen 14 gemäß Figur 2 schematisch in einem Schnitt dargestellt. Gleichartige Merkmale, wie in der Figur 2, sind mit den gleichen Bezugsziffern versehen.

An den beiden einander parallel gegenüberliegenden langen Schmalseiten 22 der Lichtleiterplatte 21 ist jeweils eine der beiden länglichen Lichtquellen 14 angeordnet derart, daß die Lampenaperturen 10 und die Sockelaperturen 18 den Schmalseiten 22 unmittelbar zugewandt sind. Auf diese Weise wird Licht über die gesamte Länge der Schmalseiten 22 in die Lichtleiterplatte 21 eingekoppelt, ohne daß die Lampen über die Lichtleiterplatte hinausstünden oder aber der Sockelbereich dunkel wäre und damit die Leuchtdichteverteilung der Lichtleiterplatte zum Rand hin deutlich abfiele.

## Patentansprüche

1. Längliche Lichtquelle (1; 14) mit mindestens einer länglichen Lampe (3) mit zwei Enden, wobei die mindestens eine längliche Lampe (3) für den Betrieb mittels dielektrisch behinderter Entladung geeignet ist und zu diesem Zwecke längliche Elektroden (7, 8) aufweist, die parallel zur Längsachse auf der Wandung des Entladungsgefäßes (6) der Lampe (3) angeordnet sind und wobei zumindest ein Teil der Elektroden (7, 8) vom Innern des Entladungsgefäßes (6) durch ein Dielektrikum (6) getrennt ist, **dadurch gekennzeichnet, daß** die bzw. jede Lampe (3) an mindestens einem Ende ein Lichtleitelement (2; 4, 5; 15, 16) aufweist.

2. Lichtquelle nach Anspruch 1, wobei das bzw. jedes Lichtleitelement (2; 4, 5; 15, 16) aus einem zumindest teilweise transparenten Isoliermaterial besteht.

3. Lichtquelle nach Anspruch 1 oder 2, wobei das mindestens eine Lichtleitelement (2; 4, 5; 15, 16) mindestens eine Vertiefung aufweist, die zur Aufnahme eines Endes der mindestens einen länglichen Lampe dient.

4. Lichtquelle nach einem der vorstehenden Ansprüche, wobei das mindestens eine Lichtleitelement (5; 15) elektrische Kontakte (11, 12; 19) zur Versorgung der mindestens einen Lampe (3) mit einer Versorgungsspannung aufweist.

5. Lichtquelle nach einem der vorstehenden Ansprüche, wobei die Mantelfläche des bzw. mindestens eines Lichtleitelements (5; 15) eine Ausgestaltung aufweist derart, daß im Betrieb das in das mindestens eine Lichtleitelement (5; 15) eingekoppelte Licht das betreffende Lichtleitelement (5; 15) bevorzugt durch die Mantelfläche in im wesentlichen gleichförmiger Weise verläßt.

6. Lichtquelle nach einem der vorstehenden Ansprüche, wobei das mindestens eine Lichtleitelement (2; 4, 5; 15, 16) einen Reflektor mit Apertur (13; 18) aufweist derart, daß im Betrieb das in das mindestens eine Lichtleitelement (2; 4, 5; 15, 16) im wesentlichen axial eingekoppelte Licht dieses Lichtleitelement (2; 4, 5; 15, 16) bevorzugt durch die Apertur (13; 18) hindurch im wesentlichen in radialer Richtung verläßt.

7. Lichtquelle nach Anspruch 6, wobei die Oberfläche des mindestens einen Lichtleitelements (2; 4, 5; 15, 16) zusätzlich mit einer Krümmung (17) - relativ zur Längsachse der mit dem betreffenden Lichtleitelements (2; 4, 5; 15, 16) verbundenen Lampe - versehen ist derart, daß im Betrieb das in das mindestens eine Lichtleitelement (2; 4, 5; 15, 16) im wesentlichen axial eingekoppelte Licht um ca. 90° umgelenkt wird und dieses Lichtleitelement (2; 4, 5; 15, 16) bevorzugt durch die Apertur (13; 18) hindurch im wesentlichen in radialer Richtung verläßt.

8. Lichtquelle nach einem der vorstehenden Ansprüche, wobei das mindestens eine Lichtleitelement (15, 16) eine Schräge (17) aufweist, die einen Winkel im Bereich zwischen ca. 30° bis 60°, bevorzugt zwischen ca. 40° und 50°, besonders bevorzugt um ca. 45° mit der Längsachse der mit dem Lichtleitelement (15, 16) verbundenen Lampe (3) einschließt.

9. Lichtquelle nach einem der vorstehenden Ansprüche mit mindestens einem Lichtleitelement als Lampensockel (4,5; 15; 16).

10. Lichtquelle nach einem der Ansprüche 1 bis 6 mit mindestens einem Lichtleitelement als Koppelelement (2), wobei jedes Koppelelement (2) zwei längliche Lampen (3) miteinander koppelt.

11. Lichtquelle nach einem der vorstehenden Ansprüche, wobei mindestens ein Lichtleitelement Mittel zur Befestigung der Lichtquelle auf einem Träger aufweist.

12. Beleuchtungsvorrichtung mit einer länglichen Lichtquelle (1) nach einem der vorstehenden Ansprüche mit mindestens zwei länglichen Lampen (3), wobei jeweils zwei längliche Lampen (3) mittels Lichtleitelement (2) aneinander gekoppelt sind, welches Lichtleitelement (2) zwei Vertiefungen (11, 12) zur Aufnahme dieser beiden Lampen (3) aufweist und wobei die beiden Vertiefungen (11, 12) einen Winkel zueinander bilden.

13. Beleuchtungsvorrichtung (20) mit einer länglichen Lichtquelle (14) nach einem der Ansprüche 1 bis 11 und einer Lichtleiterplatte (21), wobei die längliche Lichtquelle (14) gegenüber mindestens einer Schmalseite (22) der Lichtleiterplatte (21) angeordnet ist.

## Claims

1. Elongate light source (1; 14) having at least one elongate lamp (3) with two ends, the at least one elongate lamp (3) being suitable for operation by means of dielectrically impeded discharge, and having for this purpose elongate electrodes (7, 8) which are arranged parallel to the longitudinal axis on the wall of the discharge vessel (6) of the lamp (3), and at least a portion of the electrodes (7, 8) being separated from the interior of the discharge vessel (6) by a dielectric (6), **characterized in that** the or each lamp (3) has a light-guiding element (2; 4, 5; 15, 16) at at least one end.

2. Light source according to Claim 1, in which the or each light-guiding element (2; 4, 5; 15, 16) consists of an at least partially transparent insulating material.

3. Light source according to Claim 1 or 2, in which the at least one light-conducting element (2; 4, 5; 15, 16) has at least one depression which serves to hold an end of the at least one elongate lamp.

4. Light source according to one of the preceding claims, in which the at least one light-guiding element (5; 15) has electric contacts (11, 12; 19) for supplying the at least one lamp (3) with a supply voltage.

5. Light source according to one of the preceding claims, in which the lateral surface of the, or of at least one light-guiding element (5; 15) has a configuration which is such that during operation the light launched into the at least one light-guiding element (5; 15) leaves the relevant light-guiding element (5; 15) preferably through the lateral surface in a substantially uniform way.

6. Light source according to one of the preceding claims, in which the at least one light-guiding element (2; 4, 5; 15, 16) has a reflector with an aperture (13; 18) such that during operation the light launched in a substantially axial fashion into the at least one light-guiding element (2; 4, 5; 15, 16) preferably leaves this light-guiding element (2; 4, 5; 15, 16) in a substantially radial direction, preferably through the aperture (13; 18).

7. Light source according to Claim 6, in which the surface of the at least one light-guiding element (2; 4, 5; 15, 16) is provided in addition with a curvature (17) - relative to the longitudinal axis of the lamp connected to the relevant light-guiding element (2; 4, 5; 15, 16) - in such a way that during operation the light launched in an essentially axial fashion into the at least one light-guiding element (2; 4, 5; 15, 16) is deflected by approximately 90° and leaves this light-guiding element (2; 4, 5; 15, 16) in an essentially radial direction, preferably through the aperture (13; 18).

8. Light source according to one of the preceding claims, in which the at least one light-guiding element (15, 16) has a bevel (17) which encloses an angle in the range between approximately 30° and 60°, preferably between approximately 40° and 50°, with particular preference around approximately 45° with the longitudinal axis of the lamp (3) connected to the light-guiding element (15, 16).

9. Light source according to one of the preceding claims, having at least one light-guiding element as lamp base (4, 5; 15, 16).

10. Light source according to one of Claims 1 to 6, having at least one light-guiding element as coupling element (2), each coupling element (2) coupling two elongate lamps (3) to one another.

11. Light source according to one of the preceding claims, at least one light-guiding element having means for fastening the light source on a support.

12. Lighting device having an elongate light source (1) according to one of the preceding claims, having at least two elongate lamps (3), in which in each case two elongate lamps (3) are coupled to one another by means of a light-guiding element (2), which light-guiding element (2) has two depressions (11, 12) for holding these two lamps (3) and the two depressions (11, 12) forming an angle relative to one another.

13. Lighting device (20) having an elongate light source (14) according to one of Claims 1 to 11, and an optical conductor plate (21), the elongate light source (14) being arranged opposite at least one narrow side (22) of the optical conductor plate (21).

## Revendications

1. Source (1, 14) de lumière oblongue, comprenant au moins une lampe (13) oblongue ayant deux extrémités, la au moins une lampe (3) oblongue étant appropriée au fonctionnement au moyen d'une décharge rendue incomplète par voie diélectrique et comportant à cette fin des électrodes (7, 8) oblongues, qui sont disposées parallèlement à l'axe longitudinal sur la paroi de l'enceinte (6) de décharge de la lampe (3), et au moins une partie des électrodes (7, 8) est séparée de l'intérieur de l'enceinte (6) de décharge par un diélectrique (6), **caractérisée en ce que** la ou chaque lampe (3) a un élément (2, 4, 5, 15, 16) conducteur de la lumière à au moins une extrémité.

2. Source de lumière suivant la revendication 1, dans laquelle le ou chaque élément (2, 4, 5, 15, 16) conducteur de la lumière est en une matière isolante au moins en partie transparente.

3. Source de lumière suivant la revendication 1 ou 2, dans laquelle le au moins un élément (2, 4, 5, 15, 16) conducteur de la lumière a au moins une cavité qui sert à recevoir une extrémité de la au moins une lampe oblongue.

4. Source de lumière suivant l'une des revendications précédentes, dans laquelle le au moins un élément (5, 15) conducteur de la lumière a des contacts (11, 12, 19) électriques d'alimentation de la au moins une lampe (3) en une tension d'alimentation.

5. Source de lumière suivant l'une des revendications précédentes, dans laquelle la surface latérale du ou d'au moins un élément (5, 15) conducteur de la lumière a une conformation telle qu'en fonctionnement la lumière injectée dans le au moins un élément (5, 15) conducteur de la lumière quitte l'élément (5, 15) conducteur de la lumière concerné, de préférence par la surface latérale, d'une manière sensiblement uniforme.

6. Source de lumière suivant l'une des revendications précédentes, dans laquelle le au moins un élément (2, 4, 5, 15, 16) conducteur de la lumière a un réflecteur ayant une ouverture (13, 18) de façon à ce que, en fonctionnement, la lumière injectée sensiblement axialement dans le au moins un élément (2, 4, 5, 15, 16) conducteur de la lumière quitte cet élément (2, 4, 5, 15, 16) conducteur de la lumière, de préférence en passant par l'ouverture (13, 18), sensiblement dans la direction radiale.

7. Source de lumière suivant la revendication 6, dans laquelle la surface du au moins un élément (2, 4, 5, 15, 16) conducteur de la lumière est muni, en outre, d'un coude (17) par rapport à l'axe longitudinal de la lampe reliée à l'élément (2, 4, 5, 15, 16) conducteur de la lumière concerné de façon à ce que, en fonctionnement, la lumière injectée sensiblement axialement dans le au mois un élément (2, 4, 5, 15, 16) conducteur de la lumière soit déviée d'environ 90° et quitte cet élément (2, 4, 5, 15, 16) conducteur de la lumière, de préférence en passant par l'ouverture (13, 18), sensiblement dans la direction radiale.

8. Source de lumière suivant l'une des revendications précédentes, dans laquelle le au moins un élément (15, 16) conducteur de la lumière a un biais (17) qui fait un angle de l'ordre de 30° à 60° environ, de préférence de 40 à 50° environ, d'une manière tout à fait préférée d'environ 45° avec l'axe longitudinal de la lampe (3) relié à l'élément (15, 16) conducteur de la lumière.

9. Source de lumière suivant l'une des revendications précédentes, comprenant au moins un élément conducteur de la lumière sous la forme d'un culot (4, 5, 15, 16) de lampe.

10. Source de lumière suivant l'une des revendications 1 à 6, comprenant au moins un élément conducteur de la lumière sous la forme d'un élément (2) de couplage, chaque élément (2) de couplage couplant entre elles deux lampes (3) oblongues.

11. Source de lumière suivant l'une des revendications précédentes, dans laquelle au moins un élément conducteur de la lumière a des moyens de fixation de la source de lumière à un support.

12. Dispositif d'éclairage comprenant une source (1) de lumière oblongue suivant l'une des revendications précédentes ayant au moins deux lampes (3) oblongues, respectivement deux lampes (3) oblongues étant couplées entre elles au moyen d'un élément (2) conducteur de la lumière, cet élément (2) conducteur de la lumière ayant deux cavités (11, 12) de réception de ces deux lampes (3) et les deux cavités (11, 12) faisant un angle entre elles.

13. Dispositif (20) d'éclairage comprenant une source (14) de lumière oblongue suivant l'une des revendications 1 à 11 et une plaquette (21) à fibre optique, la source (14) de lumière oblongue étant placée en face d'au moins un côté (22) étroit de la plaquette (21) de fibres optiques.
